Europäisches Patentamt

European Patent Office

Office européen des brevets

(11) Veröffentlichungsnummer: **0 394 387 B1**

(19)

(12) **EUROPÄISCHE PATENTSCHRIFT**

(45) Veröffentlichungstag der Patentschrift: **27.10.93**

(51) Int. Cl.⁵: **B60T 8/00**

(21) Anmeldenummer: **89909560.8**

(22) Anmeldetag: **16.08.89**

(86) Internationale Anmeldenummer:
**PCT/EP89/00961**

(87) Internationale Veröffentlichungsnummer:
**WO 90/02064 (08.03.90 90/06)**

(54) **ANTIBLOCKIERREGELSYSTEM.**

(30) Priorität: **17.08.88 DE 3827883**

(43) Veröffentlichungstag der Anmeldung:
**31.10.90 Patentblatt 90/44**

(45) Bekanntmachung des Hinweises auf die
Patenterteilung:
**27.10.93 Patentblatt 93/43**

(84) Benannte Vertragsstaaten:
**DE FR GB IT SE**

(56) Entgegenhaltungen:
**GB-A- 2 011 564**
**US-A- 4 032 197**

(73) Patentinhaber: **ROBERT BOSCH GMBH**
**Postfach 30 02 20**
**D-70442 Stuttgart(DE)**

(72) Erfinder: **SCHAUFELBERGER, Rolf**
**Ritterstrasse 17**
**D-7257 Ditzingen 1(DE)**
Erfinder: **DEMEL, Herbert**
**Friedrichstrasse 30**
**D-7141 Möglingen(DE)**
Erfinder: **MÜLLER, Elmar**
**Gartenstrasse 32**
**D-7145 Markgröningen(DE)**

(74) Vertreter: **Kammer, Arno, Dipl.-Ing.**
**ROBERT BOSCH GmbH**
**Zentralstelle Patente-Elektronik**
**Postfach 30 02 20**
**D-70442 Stuttgart (DE)**

**Beschreibung**

Gerät ein Fahrzeug ohne Blockierschutzsystem beim Bremsen mit blockierten Rädern ins Schleudern, so bleibt im allgemeinen die vor dem Schleudervorgang bestehende Bewegungsrichtung des Schwerpunktes erhalten, da blockierte Räder keine Seitenkräfte übertragen können. Ebenso verhält sich ein Fahrzeug ohne ABS, wenn es ungebremst aufgrund des Überschreitens fahrdynamischer Grenzen ins Schleudern gerät und der Fahrer im Schleudervorgang die Bremse betätigt, so daß die Räder blockieren.

ABS verhindert das Auslösen eines Schleudervorganges beim Bremsen, solange fahrdynamische Grenzen (z.B. überhöhte Kurvengeschwindigkeit) nicht überschritten werden. Wird jedoch in einem Schleudervorgang gebremst, oder wird ein Schleudervorgang während einer geregelten Bremsung ausgelöst, können die Räder aufgrund des Blockierschutzsystems weiterhin Seitenführungskräfte übertragen. Solange die Gierwinkelgeschwindigkeit bzw. der Schwimmwinkel des Fahrzeuges nicht zu groß sind, kann der Fahrer je nach Geschicklichkeit das Fahrzeug noch auf dem gewünschten Kurs halten. Überschreiten Gierwinkelgeschwindigkeit bzw. Schwimmwinkel gewisse Grenzen, so ist auch der geübte Fahrer nicht mehr in der Lage, den Schleudervorgang unter Kontrolle zu halten.

Aufgrund der Kinematik eines Schleudervorgangs erfahren die Reifen eines Kraftfahrzeugs außerdem mit zunehmendem Schwimmwinkel eine Abnahme der wirksamen Umfangskraft. Dem ABS-Regler wird dadurch eine scheinbare Instabilität infolge Drucküberschusses vorgetäuscht. Der sich daraus ergebende Druckabbau bewirkt eine Zunahme der Seitenführungskräfte an der Vorderachse, wodurch sich je nach eingestelltem Lenkwinkel eine unkontrollierbare Fahrtrichtungsänderung ergibt, die das Schleudern weiter verstärken kann.

Aus der DE-A2-27 58 529 ist ein Antiblockierregelsystem mit den Merkmalen des Oberbegriffs des Anspruchs 1 bekannt. Dort wird wenigstens ein Rad zeitweise in hohen Schlupf gebracht, um aus dem danach wieder anlaufenden Rad Rückschlüsse auf die Straßenverhältnisse ziehen zu können.

Vorteile der Erfindung

Zur Abwendung dieser problematischen Fahrsituation werden als wirksame Maßnahme nach eindeutiger Sensierung die Vorderräder stark gebremst (in hohen Schlupf gebracht), insb. blockiert, wodurch das Fahrzeug sich wieder in Fahrtrichtung orientiert. Eine zusätzliche Unterstützung kann durch eine Bremskraftbeeinflussung an den Hinterrädern erfolgen. Eine praktische Möglichkeit ist das zumindest teilweise Abschalten des ABS bei Schleudererkennung. Im folgenden werden Möglichkeiten zur Schleudersensierung aufgezeigt. Die beim Schleudern erkennbare Diskrepanz zwischen hoher vorgetäuschter Fahrzeugverzögerung und der im Verhältnis zur Gesamtzeit hohen Druckabbauzeit läßt sich bei entsprechender Wahl eines Schwellwertes zur Sensierung eines Schleudervorgangs nutzen.

Ein möglicher Ansatzpunkt, der den Quotient aus den Differenzen von Abbau- und Aufbauzeiten an der Vorder- und Hinterachse zur Gesamtzeit T der laufenden Regelung bildet, ist in nachfolgender Gleichung formuliert:

$$SLQ = \frac{(t_{ab} - t_{auf})\ \text{vorn} + (t_{ab} - t_{auf})\ \text{hinten}}{T}\ .$$

Erreicht SLQ den vorgegebenen Schwellwert, so wird dies als Erkennung des Zustands Schleudern gewertet. Praktische Fahrversuche haben gezeigt, daß gerade auf Fahrbahnen, die einen schnellen Aufbau von Seitenführungskräften ermöglichen und somit als kritisch im Sinne des Schleuderns bewertet werden müssen, der Unterschied von SLQ bezüglich verschiedener Fahrbahnen besonders deutlich zum Ausdruck kommt. Dadurch wird ein eindeutige Sensierung der Fahrsituation, insbesondere wenn die beim Schleudern charakteristischen Radverläufe als Entscheidungskriterium hinzu gezogen werden, gesichert.

Eine weitere Möglichkeit, ein schleuderndes Fahrzeug zu erkennen, bieten die Signale analoger Beschleunigungssensoren, die den kinematischen Verlauf in Fahrzeuglängs und -querrichtung beschreiben. Sowohl das analoge Signal selbst, wie auch dessen differenzierte Form, sind für eine Sensierung geeignet. Ferner läßt sich in Verbindung mit der nachfolgenden Gleichung

$$S_W = \left( \frac{a_q}{v_F^2} \right)\bigg|_{t2} \cdot \frac{v_{Ft2}^2 \cdot a_{qt1} - v_{Ft1}^2 \cdot a_{qt2}}{a_{qt1} \cdot a_{qt2} \cdot (a_{qt2} - a_{qt1})}$$

(aq: Querbeschleunigung; $V_F$: Fahrzeuggeschwindigkeit; $t_1$, $t_2$: Überwachungszeitpunkte) ein beginnder Schleudervorgang bei Wahl eines entsprechenden Schwellwertes

$| S_W | \geqq S_W$schwell

Unter der Voraussetzung, daß die Signale des Lenkwinkels $\delta$, $\dot{\delta}$ bereitgestellt werden können, kann der funktionale Zusammenhang des Schwimmwinkels
$\beta$ (t, $\delta$, $\dot{\delta}$) mit $\delta$ und $\dot{\delta}$ ausgenutzt und die folgende Gleichung

$$A = \left( \frac{c_{SV} \cdot l_v}{\theta_Z} - \frac{c_{SV} \, c_{Sh} \cdot (l_v \cdot l_h + l_h^2)}{\theta_Z \cdot mv_F^2} \right) \delta - \frac{c_{SV}}{mV_F} \cdot \dot{\delta},$$

zur Sensierung eines Schleudervorgangs genutzt werden, wobei $C_{SV/n}$: Schräglaufsteife $l_{v/n}$: Länge Front/Heck (= Abstand zwischen Schwerpunkt und Vorderrad/Hinterrad), $\theta_Z$: Trägheitsmoment um die Hochachse, m: Fahrzeugmasse ist. Es sei erwähnt, daß die einzelnen Erkennungsmöglichkeiten getrennt, aber auch zwei oder mehrere gemeinsam angewendet werden können.

Anhand der Zeichnung werden verschiedene Ausführungsbeispiele der Erfindung näher erläutert.

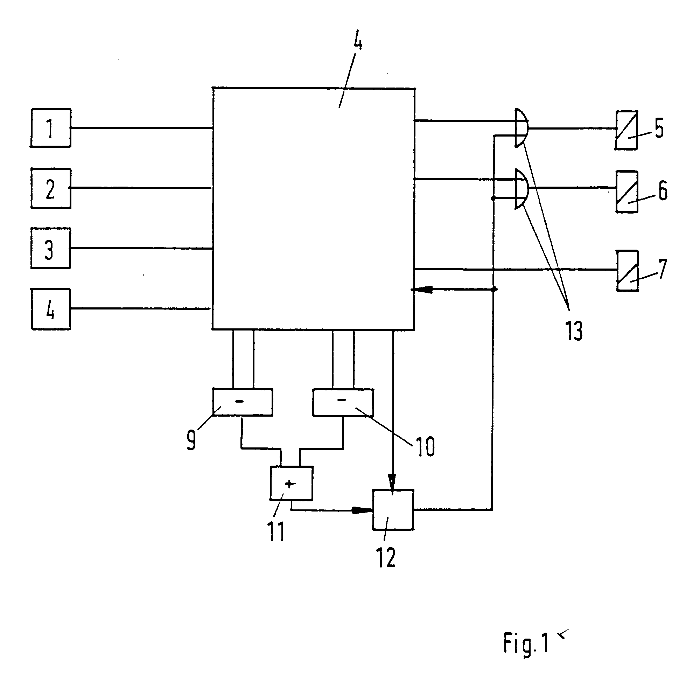

In Fig. 1 sind den Rädern eines Kraftfahrzeugs zugeordnete Geschwindigkeitssensoren mit 1 bis 4 bezeichnet. Deren das Radbewegungsverhalten kennzeichnenden Signale werden in einer Auswertschaltung 4 in Bremsdrucksteuersignale umgesetzt, mit denen den einzelnen Vorderrädern zugeordnete Drei-stellungsventile 5 und 6 und ein gemeinsames Dreistellungsventil 7 für die Hinterräder angesteuert werden. Bei den Ventilen 5 bis 7 ist unterstellt, daß sie im ABS-Fall,bei dem die Verbindung Hauptbremszylinder Radbremszylinder unterbrochen ist (nicht dargestellt), in der Grundstellung eine Druckquelle von den Radbremszylinder trennen, in einer zweiten Stellung diese Verbindung herstellen und Druckaufbau zulassen und in der dritten Stellung Druckabbau an den Radbremsen bewirken. Die Länge der Ansteuersignalein der Stellung zwei ($t_{auf}$) und drei ($t_{ab}$) eines der Ventile 5 oder 6 und des Ventils 7 sowie die Länge T der gesamten Regelzeit werden in der Auswertstellung 4 gemessen. In Differenzbildern 9 und 10 werden Differenzen ($t_{ab,V} - t_{auf,V}$) und ($t_{ab,h} - t_{auf,h}$) gebildet und diese Differenzen in einem Summierer 11 aufaddiert. In einem Dividierer 12 wird diese Summe mit der Zeit T in Relation gesetzt. Übersteigt das Verhältnis eine bestimmte Schwelle so erzeugt der Dividierer 12 ein Ausgangssignal, das die Ventile 5 und 6 über Oder-Gatter 13 in die Druckaufbaustellung steuert und die Räder zum Blockieren bringt. Außerdem wird der Regler abgeschaltet.

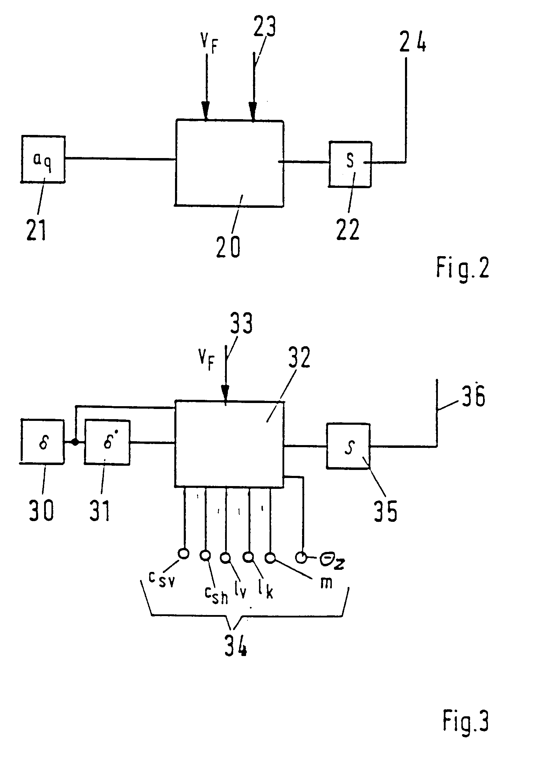

In Fig. 2 wird einem Block 20 das Analogsignal eines Querbeschleunigungsgebers 21 und von der Auswertschaltung 4 die Radgeschwindigkeit $V_F$ zugeführt. Über eine Leitung 23 erhält der Block zu kurz aufeinanderfolgenden Zeiten $t_1$ und $t_2$ ein Taktsignal, durch das die Werte für $a_q$ und $V_F$ zu den Zeitpunkten $t_1$ und $t_2$ festgehalten werden. Daraus wird die oben angegebene Größe $S_W$ errechnet, deren Absolutwert in einem Vergleicher 22 mit einen vorgegebenen Schwellwert S verglichen wird. ($| S_W | \geqq S|$ ). Überschreitet $| S_W |$ den Schwellwert so wird der Blockierdruck an den Vorderradbremsen über eine Leitung 24 eingesteuert.

In Fig. 3 wird der Lenkwinkel $\delta$ in einem Sensor 30 analog gemessen und in einem Differenzierer 31 dessen Ableitung gebildet. Ein Block 32, dem neben diesen Größen die Fahrzeuggeschwindigkeit $v_F$ von der Auswerteschaltung über eine Leitung und eine Reihe von Konstanten über Klemmen 34 zugeführt werden, bildet den oben angegebenen Ausdruck A. Übersteigt dieser Wert einen Schwellwert in einem Vergleicher 35, so erzeugt dieser ein Signal auf einer Leitung 36, das wieder einen Blockierdruck an den Vorderrädern und evt. an den Hinterrädern einsteuert.

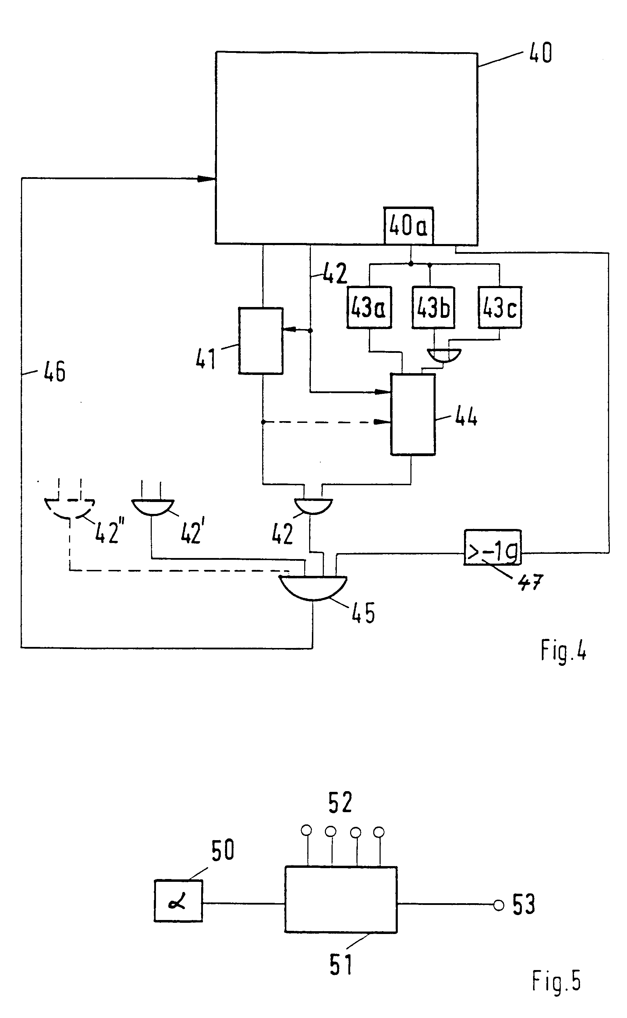

In der Fig. 4 ist nur die Auswerteschaltung 40 des Antiblockierreglers dargestellt. Diese gibt, wenn durch die Auswerteschaltung im ABS-Betrieb Druck an einem bestimmten Hinterrad abgebaut wird, Impulse zu einem Zähler 41, der die Impulse aufaddiert. Über eine Leitung 42 wird der Zähler so gesteuert, daß er jeweils nur zwischen zwei Druckaufbauphasen auftretende Impulse aufaddiert. Erreicht der Zähler 41 eine vorgegebene Schwelle, so gibt er ein Signal an ein Und-Gatter 42 ab. In einem Block 40a innerhalb der Auswerteschaltung wird die aus der zugehörigen Radgeschwindigkeit ermittelte Radverzögerung zeitgefiltert. Es sind drei Impulsgeneratoren 43a - 43c vorgesehen. Der Impulsgenerator 43a gibt Impulse an einen Zähler 44, wenn die Radverzögerung zwischen zwei Grenzwerten z.B. 0 und - 2 g liegt. Dieser addiert diese Impulse auf, wenn er über die Leitung 42 aktiviert wurde (dies ist nur dann der Fall, wenn auch der Zähler 41 in Betrieb ist). Der Impulsgenerator 43b gibt Impulse ab, wenn die Radverzögerung unterhalb des angegebenen Bereichs liegt und der Impulsgenerator 43c gibt Impulse ab, wenn die Radverzögerung oberhalb des genannten Bereichs liegt. Durch diese Impulse der Impulsgenerator 43b und 43c wird der Zähler 44 rückgezählt. Erreicht er durch das Aufaddieren und trotz des Rückzählens zwischen zwei Druckaufbauphasen eine vorgegebene Schwelle, so gibt er ein Signal zum Und-Gatter 42, das nun seinerseits ein Signal zu Und-Gatter 45 gibt.

Eine Erkennungsschaltung entsprechend den Blöcken 40a - 44 ist auch einem zweiten Rad und gegebenenfalls dritten Rad zugeordnet. Diese Räder können zwei Hinterräder, ein Vorderrad und ein Hinterrad und zwei Hinterräder und ein Vorderrad sein. Wenn für das andere Hinterrad die gleichen Erkenntnisse, wie oben beschrieben vorliegen, gibt ein Und-Gatter 42' ein Signal ab.

Wenn die Signale der Und-Gatter 42 und 42' gleichzeitig vorliegen, so entsteht ein Signal auf einer Leitung 46, das ein Erkennen das Schleudern anzeigt und entsprechende Reaktionen in der Auswerteschaltung auslöst.

Werden drei Räder überwacht, so muß auch noch ein Und-Gatter 42'' ein Ausgangssignal liefern, um ein Schleudererkennungssignal auf Leitung 46 zu erzeugen.

In Fig. 4 ist noch zusätzlich für die Schleudererkennung die Erschwernis integriert, daß die Fahrzeugverzögerung, die bekanntlich aus der Referenzsteigung gewonnen wird, eine Schwelle unterschreiten muß (z.B. - 1g) (Block 47). In Fig. 4 ist auch noch die Alternative integriert, daß der Zähler 44 erst aktiviert wird, wenn der Zähler 41 eine Schwelle überschreitet. Hier können die Und-Gatter 42, 42' und 42'' entfallen und die Zähler 44 bzw. 44' direkt mit dem Und-Gatter 45 verbunden sein. Zusätzlich könnte das Und-Gatter 45 noch einen Eingang aufweisen, auf den Signal gegeben wird, wenn bei einem Vergleich zwischen der Fahrzeugverzögerung und der gefilterten Radverzögerung eine vorgegebene Differenz überschritten wird.

In Fig. 5 ist unterstellt, daß der Lenkwinkel $\alpha$ (in 50) gemessen wird und daß über Klemmen 52 Radlastsignale (z.B. über Einfederungsweg gemessen) einen Block 51 zugeführt werden. Dieser gibt ein Schleudererkennungssignal ab, wenn bei einem bestimmten Lenkradeinschlag (z.B. nach links) die dynamische Radlastverteilung unplausibel ist (Erhöhung der Last auf der linken Seite bei diesem Lenkradeinschlag). Das dann abgegebene Signal auf Klemme 53 kann für sich alleine das Schleudern anzeigen oder zusammen mit anderen der obigen Signale die Schleudererkennung signalisieren. Der Block 51 kann auch ein Signal abgeben, wenn in ihm festgestellt wird, daß die Radlasten einseitig über wenigstens eine vorgegebene Zeit hinaus erhöht sind.

Die oben beschriebenen Schleudererkennungen können jeweils für sich alleine oder in Kombination angewendet werden.

**Patentansprüche**

1. Antiblockierregelverfahren für ein Kraftfahrzeug, das in Abhängigkeit vom Bewegungsverhalten der Fahrzeugräder (Radverzögerung, Radbeschleunigung und/oder Schlupf) den Bremsdruck an den Rädern variiert, und bei dem Räder zeitweise durch Bremsen in hohen Schlupf gebracht werden, dadurch gekennzeichnet, daß ein Schleudern des Fahrzeugs festgestellt wird (in 9 bis 12) und daß bei Erkennen des Schleuderns die Vorderräder durch Bremsen in hohen Schlupf gebracht, insbesondere blockiert werden (mittels der Ventile 5 und 6).

2. Antiblockierregelverfahren nach Anspruch 1, dadurch gekennzeichnet, daß auch die Hinterräder durch Bremsen in hohen Schlupf gebracht, insbesondere blockiert werden (mittels des Ventils 7).

3. Antiblockierregelverfahren nach Anspruch 1 oder 2, dadurch gekennzeichnet, daß zur Schleudererkennung die Summe (11) der Differenzen Druckabbau minus Druckaufbau wenigstens an einem Vorder- und einem Hinterrad bestimmt wird (9, 10), daß die ermittelte Zeit mit der Gesamtregelzeit T ins Verhältnis (12) gesetzt wird und daß auf Schleudern erkannt wird, wenn dieses Verhältnis SLQ einen vorgegebenen Wert überschreitet (12).

**4.** Antiblockierregelverfahren nach Anspruch 2, dadurch gekennzeichnet, daß die Schleudererkennung noch zusätzlich von dem Erkennen von für das Schleudern charakteristischen Radverläufen abhängig gemacht wird.

**5.** Antiblockierregelverfahren nach einem der Ansprüche 1 bis 4, dadurch gekennzeichnet, daß aus den Verläufen der Längs- und Querbeschleunigung oder deren Ableitung auf den Schleudervorgang geschlossen wird.

**6.** Antiblockierregelverfahren nach einem der Ansprüche 1 bis 5, dadurch gekennzeichnet, daß zur Schleudererkennung der Ausdruck

$$S_W = \left(\frac{a_q}{v_F^2}\right) t_2 \ x \ \frac{v_{Ft2}^2 \ a_{yt1} - v_{Ft1}^2 \ x \ a_{yt2}}{a_{yt1} \ x \ a_{qt2} \ (a_{qt2} - a_{qt1})}$$

gebildet wird (in 20) (wobei aq die Querbeschleunigung, $V_F$ die Fahrzeuggeschwindigkeit und die Indizes $t_1$ und $t_2$ Überwachungszeitpunkte bedeuten) und daß auf Schleudern erkannt wird, wenn der Absolutwert von $S_W$ über einer vorgegebenen Schwelle liegt (22).

**7.** Antiblockierregelverfahren nach einem der vorhergehenden Ansprüche, dadurch gekennzeichnet, daß zur Schleudererkennung der Ausdruck

$$A = \frac{(C_{SV} \ 1_v - C_{SV} \ x \ C_{sh} \ (1_V \ x \ 1_h + 1_h^2) \ )}{z \qquad z \ x \ mV_F^2} - \frac{C_{SV} \ x}{mV_F}$$

gebildet wird (in 32) und daß auf Schleudern erkannt wird (in 35), wenn A einen vorgegebenen Wert übersteigt, wobei $C_{SV/H}$ eine Konstante die Schräglaufsteife, $V_F$ die Fahrzeuggeschwindigkeit, m die Fahrzeugmasse, $I_{v/h}$, der Abstand zwischen Schwerpunkt und Vorderrad/Hinterrad Z das Trägheitsmoment um die Hochachse $\delta$ und der Lenkwinkel ist.

**8.** Antiblockierregelverfahren, nach einem der Ansprüche 1 bis 7, dadurch gekennzeichnet, daß die Druckabbauzeit zwischen zwei Druckaufbauten bestimmt wird (in 41), daß zusätzlich ein Aufaddieren von Inkrementen stattfindet (Inkrementieren) (in 44), wenn die negative Radbeschleunigung zwischen zwei Grenzen liegt, wobei Inkremente von der Summe abgezogen werden (Dekrementieren), wenn die Radbeschleunigung unterhalb oder oberhalb dieser Grenzen liegt und daß auf Schleudern erkannt wird (in 44), wenn die Druckabbauzeit und die Summe an wenigstens zwei Rädern vorgegebene Schwellen überschreitet.

**9.** Antiblockierregelverfahren nach Anspruch 8, dadurch gekennzeichnet, daß die wenigstens zwei Räder die beiden Hinterräder sind.

**10.** Antiblockierregelverfahren nach Anspruch 8, dadurch gekennzeichnet, daß die wenigstens zwei Räder ein Vorder- und ein Hinterrad sind.

**11.** Antiblockierregelverfahren nach Anspruch 10, dadurch gekennzeichnet, daß als drittes Rad das zweite Hinterrad mit berücksichtigt wird.

**12.** Antiblockierregelverfahren nach einem der Ansprüche 8 bis 11, dadurch gekennzeichnet, daß das Inkrementieren und das Dekrementieren erst ab Erreichen einer vorgegebenen Schwelle der Druckabbauzeit ausgelöst wird und dann das Erreichen der Schwelle durch die Summe das Schleuderkennungssignal auslöst.

13. Antiblockierregelverfahren nach einem der Ansprüche 8 bis 12, dadurch gekennzeichnet, daß Zähler verwendet werden, die jeweils die Druckaufbauzeit und die Summe durch Zuführung von Inkrementen bilden und bei Erreichen der Schwellen die Schleudererkennung bewirkten.

14. Antiblockierregelverfahren nach einem der Ansprüche 8 bis 13, dadurch gekennzeichnet, daß die Radbeschleunigungssignale zeitgefiltert werden.

15. Antiblockierregelverfahren nach einem der Ansprüche 8 bis 14, dadurch gekennzeichnet, daß die Schleudererkennung zusätzlich von der aus Radgeschwindigkeiten ermittelten Fahrzeugverzögerung abhängig gemacht wird.

16. Antiblockierregelverfahren nach Anspruch 15, dadurch gekennzeichnet, daß nur auf Schleudern erkannt wird, wenn zusätzlich die Fahrzeugverzögerung eine Schwelle (z.B. ca. - 1g) unterschreitet.

17. Antiblockierregelverfahren nach Anspruch 16 oder 17, dadurch gekennzeichnet, daß zusätzlich die Fahrzeugverzögerung mit der gefilterten Radverzögerung verglichen wird und daß auf Schleudern erkannt wird, wenn zusätzlich eine Differenz größer als eine vorgegebene Schwelle (z.B. ca. 2g) auftritt.

18. Antiblockierregelverfahren nach einem der Ansprüche 1 bis 17, dadurch gekennzeichnet, daß auf Schleudern erkannt wird, wenn die Radlasten über eine vorgegebene Zeit hinaus einseitig erhöht sind.

19. Antiblockierregelverfahren nach einem der Ansprüche 1 bis 18, dadurch gekennzeichnet, daß auf Schleudern erkannt wird, wenn bei einem gegebenen Lenkradeinschlag festgestellte einseitige Radlasten nicht plausibel sind.

**Claims**

1. Anti-locking control method for a motor vehicle which varies the brake pressure at the wheels as a function of the motion behaviour of the vehicle wheels (wheel deceleration, wheel acceleration and/or slip) and in which wheels are brought into a high state of slip at times by braking, characterised in that skidding of the vehicle is determined (in 9 to 12), and in that, on recognition of skidding, the front wheels are brought into a high level of slip, in particular are locked, by braking (by means of the valves 5 and 6).

2. Anti-locking control method according to Claim 1, characterised in that the rear wheels are also brought to a high slip level, in particular are locked, by braking (by means of the valve 7).

3. Anti-locking control method according to Claim 1 or 2, characterised in that, for skid recognition (9, 10), the sum (11) of the differences of pressure reduction minus pressure build-up is determined at least on one front wheel and one rear wheel, in that the time determined is put into a ratio (12) with the total control time T, and in that skidding is recognised when this ratio SLQ exceeds a specified value (12).

4. Anti-locking control method according to Claim 2, characterised in that the skid recognition is, in addition, made dependent on the recognition of wheel variations characteristic of skidding.

5. Anti-locking control method according to one of Claims 1 to 4, characterised in that conclusions are drawn about the skidding process from the variations of the longitudinal and transverse acceleration or their derivatives.

6. Anti-locking control method according to one of Claims 1 to 5, characterised in that the expression

$$S_W = \left( \frac{a_q}{V_F^2} \right) t_2 \times \frac{V_{Ft2}^2 \, a_{yt1} - V_2^{Ft1} \times a_{yt2}}{a_{yt1} \times a_{qt2} \, (a_{qt2} - a_{qt1})}$$

is formed for skid recognition (in 20) (where aq is the transverse acceleration, $V_F$ is the vehicle velocity and the indices $t_1$ and $t_2$ signify monitoring instants), and in that skidding is recognised when the absolute value of $S_W$ is above a specified threshold (22).

7. Anti-locking control method according to one of the preceding claims, characterised in that the expression

$$A = \frac{(C_{SV} \, l_v - C_{SV} \times C_{sh} \, (l_v \times l_h + l_h^2) \,)}{Z \times mV_F^2} - \frac{C_{SV} \times}{mV_F}$$

is formed for skid recognition (in 32), and in that skidding is recognised (in 35) when A exceeds a specified value, where $C_{SV/H}$ is a constant the skew running stiffness [sic], $V_F$ is the vehicle velocity, m is the vehicle mass, $l_{v/h}$ is the distance between the centre of gravity and the front wheel/rear wheel, Z is the moment of inertia about the vertical axis, $\delta$ and is the steering angle [sic].

8. Anti-locking control method according to one of Claims 1 to 7, characterised in that the pressure reduction time is determined between two pressure build-ups (in 41), in that, in addition, an addition of increments takes place (incrementing) (in 44) when the negative wheel acceleration lies between two limits, the increments being subtracted from the sum (decrementing) when the wheel acceleration lies below or above these limits, and in that skidding is recognised (in 44) when the pressure reduction time and the sum exceeds specified thresholds on at least two wheels.

9. Anti-locking control method according to Claim 8, characterised in that the at least two wheels are the two rear wheels.

10. Anti-locking control method according to Claim 8, characterised in that the at least two wheels are one front wheel and one rear wheel.

11. Anti-locking control method according to Claim 10, characterised in that the second rear wheel can also be taken into account as a third wheel.

12. Anti-locking control method according to one of Claims 8 to 11, characterised in that the incrementing and the decrementing are only initiated on reaching a specified threshold of the pressure reduction time, and the reaching of the threshold by the sum then initiates the skid recognition signal.

13. Anti-locking control method according to one of Claims 8 to 12, characterised in that counters are used which respectively form the pressure build-up time and the sum by the supply of increments and effected [sic] the skid recognition on reaching the thresholds.

14. Anti-locking control method according to one of Claims 8 to 13, characterised in that the wheel acceleration signals are time-filtered.

**15.** Anti-locking control method according to one of Claims 8 to 14, characterised in that the skid recognition is, in addition, made dependent on the vehicle deceleration determined from the wheel velocities.

**16.** Anti-locking control method according to Claim 15, characterised in that skidding is only recognised when, in addition, the vehicle deceleration is less than a threshold (e.g. approximately -1 g).

**17.** Anti-locking control method according to Claim 16 or 17, characterised in that, in addition, the vehicle deceleration is compared with the filtered wheel deceleration, and in that skidding is recognised when, in addition, a difference larger than a specified threshold (e.g. approximately 2 g) occurs.

**18.** Anti-locking control method according to one of Claims 1 to 17, characterised in that skidding is recognised when the wheel loads are increased on one side for longer than a specified time.

**19.** Anti-locking control method according to one of Claims 1 to 18, characterised in that skidding is recognised when, for a given steering wheel deflection, wheel loads determined on one side are not plausible.

**Revendications**

**1.** Procédé de régulation anti-blocage d'un véhicule automobile qui modifie la pression de frein au niveau des roues en fonction du comportement en mouvement des roues du véhicule (décélération de roue, accélération de roue et/ou patinage) et qui met de temps en temps les roues partiellement en freinage avec patinage important, procédé caractérisé en ce qu'on détecte un dérapage du véhicule (selon 9-12) et, en cas de détection du dérapage, on met également les roues avant en patinage important en les freinant et notamment en les bloquant (à l'aide des distributeurs 5, 6).

**2.** Procédé de régulation anti-blocage selon la revendication 1, caractérisé en ce qu'on met également les roues arrière en patinage important par freinage, notamment en les bloquant (à l'aide du tiroir 7).

**3.** Procédé de régulation anti-blocage selon la revendication 1 ou 2, caractérisé en ce que pour la détection du dérapage on détermine la somme (11) des différences entre la diminution de pression et l'augmentation de pression sur au moins une roue avant et une roue arrière (9, 10) et on met le temps ainsi obtenu en rapport avec le temps total de régulation T, (12) et on détecte le dérapage lorsque ce rapport SLQ dépasse une valeur prédéterminée (12).

**4.** Procédé de régulation anti-blocage selon la revendication 2, caractérisé en ce qu'on fait dépendre en outre la détection du dérapage de la détection de déplacement de roue caractéristique du dérapage.

**5.** Procédé de régulation anti-blocage selon l'une des revendications 1-4, caractérisé en ce qu'à partir du tracé de l'accélération longitudinale et transversale ou de sa dérivée on conclut à une phase de dérapage.

**6.** Procédé de régulation anti-blocage selon l'une des revendications 1 à 5, caractérisé en ce qu'on forme l'expression suivante pour reconnaître le dérapage :

$$S_W = \left(\frac{aq}{v_F^2}\right)\Big|_{t2} \cdot \frac{v_{Ft2}^2 \cdot a_{qt1} - v_{Ft1}^2 \cdot a_{qt2}}{a_{qt1} \cdot a_{qt2} \cdot (a_{qt2} - a_{qt1})}$$

dans la phase (20) (aq étant l'accélération transversale, $V_F$ la vitesse du véhicule et les indices $t_1$ et $t_2$ correspondant à des instants de contrôle) et en ce qu'on détecte le dérapage si la valeur absolue de $S_W$ dépasse un seuil prédéterminé (22).

EP 0 394 387 B1

**7.** Procédé de régulation anti-blocage selon l'une des revendications précédentes, caractérisé en ce qu'on forme l'expression suivante (dans 32)

$$
A = \left[ \frac{c_{SV} \cdot l_v}{\theta_Z} - \frac{c_{SV} \, c_{Sh} \cdot (l_v \cdot l_h + l_h^2)}{\theta_Z^2 \cdot mV_F} \right] d - \frac{c_{SV}}{mV_F} \cdot \dot{d},
$$

pour reconnaître le dérapage et en ce qu'on détecte le dérapage (selon 32) si la valeur A dépasse une valeur prédéterminée, l'expression $c_{SV/H}$ étant une constante, c'est-à-dire la pente du déplacement oblique, $V_F$ la vitesse du véhicule, m la masse du véhicule, $l_{v/h}$ la distance entre le centre de gravité et la roue avant/roue arrière, Z le moment d'inertie autour de l'axe vertical et d l'angle de guidage.

**8.** Procédé de régulation anti-blocage selon l'une des revendications 1 à 7, caractérisé en ce qu'on détermine le temps de diminution de pression entre deux temps de montée en pression (dans 41) et en ce qu'en plus on additionne des incréments (incrémentation) (dans 44) lorsque l'accélération négative de roue se situe entre deux limites, en retranchant des incréments de la somme (décrémentation) lorsque l'accélération de roue se situe en-dessous ou au-dessus de ces limites et en ce qu'on reconnaît le dérapage (dans 44) si le temps de diminution de pression et la somme sur au moins deux roues dépassent des seuils prédéterminés.

**9.** Procédé de régulation anti-blocage selon la revendication 8, caractérisé en ce que les deux roues sont les roues arrière.

**10.** Procédé de régulation anti-blocage selon la revendication 8, caractérisé en ce que les deux roues comprennent une roue avant et une roue arrière.

**11.** Procédé de régulation anti-blocage selon la revendication 10, caractérisé en ce que comme troisième roue on prend en compte la seconde roue arrière.

**12.** Procédé de régulation anti-blocage selon l'une des revendications 8 à 11, caractérisé en ce qu'on déclenche l'incrémentation et la décrémentation seulement après que le temps de diminution de pression ait atteint un seuil prédéterminé et à ce moment le fait que la somme atteigne le seuil déclenche le signal de détection de dérapage.

**13.** Procédé de régulation anti-blocage selon l'une des revendications 8 à 12, caractérisé en ce qu'on utilise des compteurs qui forment chaque fois le temps de montée en pression et la somme par fourniture d'incréments et, lorsqu'on atteint les seuils, ils provoquent la détection du dérapage.

**14.** Procédé de régulation anti-blocage selon l'une des revendications 8 à 13, caractérisé en ce qu'on filtre dans le temps les signaux d'accélération de roue.

**15.** Procédé de régulation anti-blocage selon l'une des revendications 8 à 14, caractérisé en ce qu'on fait dépendre la détection du dérapage en plus de la décélération du véhicule déterminée à partir de la vitesse de roue.

**16.** Procédé de régulation anti-blocage selon la revendication 15, caractérisé en ce que l'on ne détecte le dérapage que si en plus la décélération du véhicule passe en-dessous d'un seuil (environ - 1g).

**17.** Procédé de régulation anti-blocage selon la revendication 16 ou 17, caractérisé en ce qu'en plus on compare la décélération du véhicule à la décélération filtrée de roue et on détecte le dérapage si en outre on a une différence supérieure à un seuil prédéterminé (par exemple de l'ordre de 2g).

**18.** Procédé de régulation anti-blocage selon l'une des revendications 1 à 17, caractérisé en ce qu'on détecte le dérapage si les charges de roue augmentent unilatéralement au-delà d'une durée prédéterminée.

9

**19.** Procédé de régulation anti-blocage selon l'une des revendications 1 à 18, caractérisé en ce qu'on détecte le dérapage si pour un même braquage donné de roue directrice, des charges de roue, unilatérales constatées, ne sont pas plausibles.

Fig.1

11

Fig.2

Fig.3

Fig.4

Fig.5